(19) **Europäisches Patentamt**
**European Patent Office**
**Office européen des brevets**

(11) **EP 4 383 939 B1**

(12) **EUROPEAN PATENT SPECIFICATION**

(45) Date of publication and mention
of the grant of the patent:
**01.07.2026  Bulletin 2026/27**

(51) International Patent Classification (IPC):
***H05B 1/02*** (2006.01)      ***H05B 3/26*** (2006.01)
***F24D 13/02*** (2006.01)      ***F24D 19/10*** (2006.01)

(21) Application number: **22211474.6**

(22) Date of filing: **05.12.2022**

(52) Cooperative Patent Classification (CPC):
**H05B 3/26; F24D 13/024; F24D 19/1096;**
**H05B 1/0275;** F24D 2220/2081; H05B 2203/005;
H05B 2203/026

(54) **MULTI LAYER HEATING MAT FOR ELECTRICAL FLOOR HEATING OR ELECTRICAL WALL HEATING**

MEHRSCHICHTIGE HEIZMATTE FÜR ELEKTRISCHE FUSSBODEN- ODER WANDHEIZUNG

TAPIS CHAUFFANT MULTICOUCHE POUR CHAUFFAGE ÉLECTRIQUE DE SOL OU CHAUFFAGE ÉLECTRIQUE DE MUR

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**12.06.2024  Bulletin 2024/24**

(73) Proprietor: **Green Energy Flies AG**
**9404 Rohrschacherberg (CH)**

(72) Inventors:
• **Braunsberg, Hermann**
**9404 Rohrschacherberg (CH)**
• **Schott, Stephan**
**96120 Bischberg (DE)**
• **Hutmacher, Daniel**
**3005 Bern (CH)**

(74) Representative: **Lohr, Jöstingmeier & Partner**
**Patent- und Rechtsanwälte mbB**
**Junkersstraße 3**
**82178 Puchheim/München (DE)**

(56) References cited:
**EP-A1- 3 016 475**      **WO-A1-2007/137854**
**WO-A1-2021/259896**      **GB-A- 2 493 623**
**US-A1- 2008 210 679**

EP 4 383 939 B1

## Description

## Field of the invention

The invention relates to a multi-layer heating mat for electrical floor heating and/or electrical wall heating. The heating mat has a support layer with an electrically isolating upward facing surface. On the isolating electrical surface is a heating layer.

## Description of the related art

German Patent DE 10327342 B4 suggests an electric floor or wall heating with an electrically isolating support layer and an electrically conductive heating layer on top of the support layer. Two strip electrodes are attached to the up facing surface of the heating layer, thereby being electrically connected to the heating layer. The two strip electrodes are connected to a switching power supply.

US 2008/0210679 A1 discloses another such panel heating floor device for a floor heating.

In contrast, WO 2021/259896 A1 discloses a heating panel for a ceiling.

WO 2007/137854A discloses a floor construction with an electrical heating. The floor construction has a concrete base plate being a part of the building structure. In a first step, the concrete base plate is fully covered with a number of rectangular thermally and electrically isolating plates. On top of each isolating plate is a surface heating element. The surface heating elements have a smaller surface than the isolating plates and are connected in parallel by connectors bridging the gaps between neighbored heating elements. Finally, the structure defined by the isolating plates and the heating plates is embedded in casting resin.

EP 3 016 475 A reports that heating mats of non-woven made of conductive fibers suffer from an increase of the electrical resistance after installation. Based on supplying the non-woven with a constant voltage, the current through the non-woven decreases. The authors of EP 3 016 475 A believe that this decrease is due to oxidation of the conductive fibers which leads to a massive increase of the contact resistance between neighbored, mechanically contacting fibers. In case the current drops below a given threshold, they suggest providing bursts of increasing voltages to the non-woven until a disruptive discharge removes the oxide layers at the contact points and thereby restores the initial resistance of the non-woven.

EP 3 691 480 A relates to a seat heating and suggests a non-metallic porous or perforated fabric heating element comprising an electrically conductive inner non-continuous fibrous web layer with integrated conductive busbar strips. The inner layer is bonded and sandwiched between two outer insulating layers of woven or non-woven material (e.g., continuous fiber) material.

Document WO 2021/259896 A1 discloses a heating panel including a thermally conductive (e.g. metal) layer, a laminar heating element disposed over a framingfacing side of the thermally conductive layer, an insulation layer disposed over the laminar heating element, and a room-facing surface layer disposed over at least the room-facing side of the thermally conductive layer. A method for heating a room may include installing at least one heating panel on a ceiling of the room and providing power to the heating element to generate heat that radiates into the room. The panel may be part of a heating system including a controller, such as a thermostat, for regulating power to the heating panel. A plurality of heating panels or a plurality of heating zones in one or more of the panels may be independently controllable.

Document WO 2007/137854 A1 discloses a floor construction comprising at least one electrically operable surface heating element. A permanent upper floor covering is proposed that has been constructed in a seamless fashion which covers at least one surface heating element and forms a layer casting from a casting medium that can be poured, in particular a liquid, as well as a curing casting medium.

Document US 2008/0210679 A1 relates to a panel healing device for placing in the floor area, comprising an electrically conductive layer and electrical supply lines. In order to provide a floor heating system having a low overall height while simultaneously damping noises, the invention provides that at least one sounddamping layer.

Document GB 2493623 A discloses a heating system comprises a plurality of groups of one or more radiating panels. Each panel includes a slab of material, preferably ceramic, and a resistive heating element. Each of the groups is connected in parallel with an electricity supply line and is controlled by a respective electronic switch, which selectively couples the group to the supply line. An electronic control unit is arranged to control the switches so as to couple one or more of the plurality of groups to the supply line for a period of time sufficient to bring the panels to a predetermined temperature and subsequently couple one or more of the plurality of groups to the supply line when a temperature measured by a temperature sensor associated with the group falls below a predetermined threshold.

## Summary of the invention

The problem to be solved by the invention is to provide an efficient electrical heating apparatus that can be installed and operated easily using standardized power supplies with reduced manufacturing cost and reduced installation costs. Solutions of the problem are described in the independent claims. The dependent claims relate to further improvements of the invention.

To ease reading we will use the short forms *"isolating", "isolator", "conducting"* or *"conductor"* when referencing to the electrical characteristics of an electrical isolator or electrical conductor, respectively, being electrically non-conducting or electrically conducting, respectively (at operating temperatures, being typically between -40°C and +75°C when operated in living spaces). When referencing to the corresponding thermal characteristics we will use "insulating" and/or *"thermally isolating"* and/or "insulator" and *"thermally conducting"* and/or *"thermal conductor"*.

The invention is based on a number of observations: In modern buildings, the required heating power is vastly reduced due to improved building insulation. Further, a major cost driver of electrical heating systems is the conductive heating layer. Most prior art heating mats show a very low resistance and hence require comparatively high currents to convert a given electrical power $P = U \cdot I$ into thermal power (as usual $U$ is the voltage drop and $I$ is the current). These comparatively high currents require thus expensive cables, power supplies, relays etc. which all need to be dimensioned accordingly.

A first preferred embodiment of the invention is directed to a heating apparatus, comprising at least a controller, a number of $n$ sets of at least one heating mat and a number $m$ of at least two power supplies, wherein at least one, preferably each, of the sets of heating mats are each connected via two first connections comprising switches to at least two of the power supplies, wherein the switches are controlled by the controller,

> wherein the number $m$ of power supplies is smaller than the number of heating mats,
> wherein at least one of the heating mats is a member of a set of heating mats and in that the controller is configured for individually control operation of each of the sets of heating mats, and
> wherein the controller is configured to open and close a second connection, wherein the second connection is a series connection of at least two of the power supplies to a single one of the $n$ sets of heating mats.

A second preferred embodiment of the invention is directed to a heating apparatus, comprising at least two power supplies, at least two sets of at least one heating mat, at least two electrically controlled switches and a controller for controlling the switches, wherein the at least two heating mats are each connected via two first connections comprising at least one electrically controlled switch with at least two of the power supplies,

> wherein at least one of the at least two heating mats comprises at least a support layer with an upper isolating surface and a heating layer on top of the isolating surface,
> wherein at least one of the heating mats is a member of a set of heating mats and in that the controller is configured for individually control operation of each of the sets of heating mats,

wherein the controller is configured to close only a number of electrically controlled switches being smaller than the number of heating mats at the same time, and
wherein the controller is configured to open and close a second connection, wherein the second connection is a series connection of at least two of the power supplies to a single one of the at least two sets of heating mats.

The heating mat (as well herein briefly 'mat') used in the heating apparatus is preferably configured to be provided as a coil. In other words, the mat can be rolled to form a roll which may as well be referred to as coil. In another example, the mat may be foldable (in addition or alternatively). Both options equally simplify transportation and storage of these mats. After delivery to the intended place of installation the mat may be unrolled and/or unfolded (if delivered in the respective form) and positioned directly on a concrete base plate (i.e., typically in between of the base plate and a screed) and/or (preferably directly) on top of an impact-sound insulation layer and/or as well (preferably directly) on top of a/the screed. In the latter case, the mat may be positioned between the screed and a usual floor covering like, e.g., carpet, floor tiles, parquet, linoleum floor, etc. In a preferred example the mat is configured as an impact-sound insulation layer.

Alternatively, the mat may be attached to a wall and may as well be covered by plaster.

The mat comprises a support layer. The support layer is herein assumed to be laid down on a plane horizontal floor. This assumption is made only to allow using normal references like above or below to describe the relative positions of the elements of the mat. Of course, this assumed planar horizontal extension is not limiting. The mat can of course be installed to or in inclined floors, walls and/or ceilings, these structures may alternatively or in addition as well be curved.

The support layer hence extends from its bottom surface to its upward facing top surface. Side surfaces connect the bottom surface and the top surface and delimit the support layer horizontally. The upward facing top surface is isolating, i.e., not electrically conducting. The support layer may be considered as sheet, which may have multiple sublayers. For example, the support layer may comprise one or more isolating sublayer(s) and one or more a conducting sublayer(s). The support layer may be an impact-sound insulation layer.s

The mat has a heating layer on top of the isolating surface and the heating layer preferably comprises at least one, preferably two, three, four or any higher number of electrically conductive stripes, each having a longitudinal extension $l$ and a width w. The higher number does not have theoretical upper limit, but in practice 1000, 500 or 100 conducting stripes may be assumed to provide reasonable upper limits. In general, the higher the number of conducting stripes, the smaller their width $w_c$ has to be to fit into these corresponding number of stripes in a heating mat of a given width $w_m$. Only for simplicity, we will describe the invention based on an example of only two conductive stripes, but this number shall be understood as an example, which may be replaced by any other number s (e.g., $1 \leq s \leq 1000$). The at least two electrically conductive stripes are preferably horizontally spaced from each other. An isolating stripe may extend in between of the two conductive stripes. In case there is only a single conducting stripe (s=1), the conducting stripe is preferably side by side to at least one isolating stripe. For example, the conducting stripe may be in between of two isolation stripes being horizontally spaced from each other. Preferably, the at least one isolating stripe is a polymer sheet. Examples for suited polymers are polyethylene (PE), polyethylene terephthalate (PET), polyvinyl chloride (PVC), polyether sulfone (PES), etc. The isolating stripe may as well comprise and/or consist of non-conducting fibers, e.g., organic fibers and/or fibrous materials. Particularly preferred are natural fibers. The fibers and/or fibrous materials contribute to an improved impact sound reduction and may show a similar elasticity and thickness as the conducting stripes, at least if the conducting stripes are or comprise conducting fabric (woven or non-woven conducting fibers). In other words, the heating mat has at least two conductive stripes. At least one if these conductive stripes may comprise a fabric comprising conductive fibers.

The conductive fibers can be steel fibers, for example stainless steel fibers. The advantage of stainless-steel fibers is that stainless steel as a comparatively high resistivity (if compared to, e.g., copper or aluminum) and at the same time is not prone to corrosion. Thus, the resistance of a given heating element does not change over time because the fibers still being in mechanical contact with each other do not suffer from corrosion inhibiting electrical contact between the respective fibers. But in principle any conducting fiber can be used, be it a metallic fiber or a conducting organic fiber and/or a conducting compound fiber. The length of the conductive stripe $l_c$ and/or the length of the isolating stripe $l_i$ corresponds preferably at least essentially to the length of the support layer $l_m$. At least essentially means in this context that the same lengths are preferred but that deviations (e.g., within $\pm 20\%$, $\pm 15\%$, $\pm 10\%$, $\pm 5\%$ or $\pm 1\%$ of the length of the support layer $l_m$) can be accepted. A stripe may generally comprise multiple aligned stripe sections which have only fraction of the full length of the corresponding stripe. The stripe sections are preferably but not necessarily unitary. Further, only for simplicity, it is assumed (i.e., preferred, but not required) that the stripes extend parallel to each other and that they extend preferably straight along their longitudinal direction (if the heating mat is neither coiled nor folded).

Only to simplify terminology, the heating layer and hence the stripes have a first side and a second side. The first side faces towards the support layer and the second side faces in the opposite direction (i.e., away from the support layer).

This stripe shape of the heating layer has shown to improve the mechanical properties of the mat as well as to simplify the electronics to operate the mat, while at the same time it reduces the manufacturing costs, as the amount of expensive conducting fabric is reduced. For example, depending on the dimension of the mat and of the stripes, these can be connected in series to thereby increase the voltage required for a given heating power. A preferred voltage is smaller or equal to 50V AC or 120VDC (e.g., 48V AC), as in this case the voltage is considered as extra low voltage not being of harm to humans. Once a given voltage level has been reached, additional sets of conductive stripes may be connected in parallel to thereby stay at or below 48V. Thus, in a preferred example, at least two sets of at least two stripes being connected in series are connected in parallel.

In a preferred example, an isolating top layer is on the heating layer. This isolating top layer simplifies installation of the mat and increases its versatility. The isolating top layer may be laminated on top of the heating layer, i.e., on the first surface of the heating layer. Another important aspect is that the heating layer is shifted if not into, then at least towards the neutral phase of the mat. Thereby, the mechanical stress on the heating layer is reduced when coiling up the mat to ease transportation.

Preferably, the top layer and/or the support layer are/is fluid tight, at least watertight but at least of the top layer and the support layer may preferably allow diffusion of gases like $O_2, N_2$, or other air components. This has shown to increase longevity of the heating mat 1.

Preferably, at least one of the heating mat two conducting stripes has a first contact electrode and a second contact electrode and in that the first contact electrode and the second contact electrode are spaced by at least $\dfrac{1}{3}$ of the width of the at least one conductive stripe.

Preferably, the first and the second contact electrodes are bands of a conducting material being attached to the first and/or second surface of the respective conducting stripe. For example, both contact electrodes may be conducingly attached to the first side or to the second side. In another example a first contact electrode may be conducingly attached to the first side and the other may be conducingly attached to the second side of a conducting stripe. "Conducingly attached shall expresses that the contact electrode and the conducting stripe in direct contact to thereby establish an electrically conducting connection between these. The contact electrode(s) may further be connected to a power source.

In an example, conducting fibers (or at least one conducting fiber) of the stripe extend(s) through an opening of the band. Thereby, the contact resistance between the contact electrode and the band can be reduced. For example, the band may be interwoven and/or entangled with fibers of the stripe. In a preferred example, the at least one contact electrode extends between the support layer and the heating layer. Thereby, the weight of the heating layer presses the heating layer onto the stripe being supported by the support layer. This pressure results as well in a reduction of the contact resistance. Further, the contact(s) are even closer to the neutral phase of the mat and the risk of rupturing them when rolling or folding the mat is reduced. In a particularly preferred example, there is a yarn (which may be conductive or an isolator) on the surface of the contact electrode that faces away from the conducting stripe. For example, if the contact electrode is on the bottom side of the stripe, the optional yarn may be in between of the contact electrode and the support layer. In case a contact electrode is on the up facing surface of the conducting stripe, the optional yarn may be on the up facing side of the contact electrode. In the latter case, the yarn is preferably covered by the isolating layer. In all these examples, that may as well be combined, the yarn contributes to a low contact resistance between the stripe and the contact electrode, because the yarn creates a zone of enhanced mechanical contact between the contact electrode and the conducting stripe. The yarn may be monolithic or may comprise at least two filaments, wires, and/or other components.

For example, heating mats being installed in a single room can be connected (e.g., in parallel) to form a set of heating mats. At least one of heating mats is preferably a heating mat as described above or with respect to the figures. A set of heating mats may as well comprise only a single heating mat. Thus, by opening and closing the first connection, the controller may switch the first set of heating mats off or on, respectively and thereby e.g., control heating of the room in which the mat is installed. Each of the sets of heating mats may have a number of first connections, hence the at least one set of heating mats may be connected in parallel to a number of power supplies at the same time. In other words, a first of the first connections may connect the corresponding first set of heating mats to a first power supply and a second of the first connection may connect the same set of heating mats to a second power supply and so on. In case two of the first connections are closed (by closed the corresponding switches), the corresponding set of heating mat would be connected in parallel to two power supplies. The latter is usually not required, and it is hence preferred if the controller is configured to close only a single first connection per set of heating mats. Having a set of heating mats with at least two first connections provides a redundancy in case one of the power supplies fails. The first connections may of course include switches enabling to selectively open and close the first connections.

Further, the controller is configured to open and close a second connection, wherein the second connection is a series connection of at least two power supplies to a single one of the at least one set of heating mats. Of course, the second connection should only be closed in case all first connections to the respective set of heating mats are open. This scheme allows to operate the set of heating mats in a heating mode by closing at least one of the first connections of a corresponding set of heating mats. In other words, in normal operation, the first connections are opened and closed as required by the heating demand to thereby control a temperature, e.g., a corresponding room temperature. In case the resistance of a set of heating mats increases or as well to avoid such an increase before it is observed or as a precautionary measure in case it could be observable, the first connections of a stripe or a number of stripes or a mat or a set of heating mats may all be opened by the controller and for a (preferably short) amount of time $t$, the corresponding second connection of the stripe or the mat or a number of stripes or the set of heating mats, respectively may be closed by the controller. Thereby, the resistance can be lowered and/or an increase of the resistance over a threshold can be prevented. In a preferred example, the second connection(s) remain closed only for short amount of time $t$. A short amount of time $t$ is any duration $t_b$ or time span $t_b$ with $t_b \le t_{max}$ and $t_{max}/s \in T_b$ and $T_b = \{10, 2, 1, 0.5, 0.250, 0.1, 0.01, 10^{-3}, 0.5 \cdot 10^{-3}\}$. A duration $t_b$ of a few microseconds ($\mu s$) should be sufficient. Preferred are durations of a couple of hundred milliseconds ($ms$), for example $100ms$ or $200ms$ or $300ms$ or $400ms$, or .... The second connection may be closed and opened in a given sequence, for example the second connection may be closed for $k$ bursts of a duration $t_{b,j}$ ($1 \le j \le k$) while being open in between of these $n$ bursts for a time span $t_{o,j}$ ($1 \le j \le k$). In an example, $k = 50$ and $0.05ms \le t_{b,j} \le 1s$ and $0.05 \le t_{o,j} \le 1$ (preferably $\forall 1 \le j \le k$), showed to reliably avoid fritting. Other numbers of $k$ can of course be used as well, in a preferred example $1 \le k \le 1000$ (more preferred $k \le 100$, preferably $k \le 75$, $k \le 50$, $k \le 25$, $k \le 10$, $k \le 5$ or $k = 1$) and the disclosed limits of $t_{b,j}$ and $t_{o,j}$ are only preferred examples.

Preferably, after such set of bursts of length $t_{b,j}$ the second connection may be opened again. If the second connection is open, the controller may resume normal operation by opening and closing the corresponding first connection as required to heat the corresponding room (or another device). Preferably, there is minimum time interval $t_m$ between subsequent bursts or subsequent sets of $k$ burst ($k \le 100$, preferably $k \le 75$, $k \le 50$, $k \le 25$, $k \le 10$, $k \le 5$ or $k = 1$. The minimum time interval $t_m$ is preferably greater or equal than $t_{min}$ (i.e., $t_m \le t_{min}$) and $t_{min}/s \in T_m$ with $T_m = \{1, 20, 30, 60, 300, 600, 10^3\}$. As usual $s$ is the unit of time and represents a second ($[t] = 1s$).

The inventors have found, that the complex scheme being described in EP 3 016 475 A is not required to maintain the resistance of the heating mats low and further, that a measurement of the resistance is not required, instead one may simply apply bursts of essentially double the voltage as used during normal operation of heating by the heating mat, which can easily be accomplished by opening at least one first connection and closing the corresponding second connection for a short amount of time in regular or irregular intervals.

As already clear from the above and as usually understood usually by the skilled person, a stripe is a thin elongates piece. Herein, a stripe shall be considered to have a thickness $h_s$ (height), a width $w_s$ and a longitudinal extension (i.e., a length) $l_s$, wherein the length $l_s$ is significantly longer than the thickness and the width (as already apparent $s \in \{c, i\}$). For example, the thickness is typically (and preferably but not necessarily) less than a tenth of the width (preferably $h_s \leq \frac{1}{10} w_s$ ) and the width $w_s$ is preferably less than twice the length (preferably $w_s \leq 1.5 \ l_s$, more preferred $w_s \leq 1 l_s$, $w_s \leq \frac{1}{2} l_s$, $w_s \leq \frac{1}{4} l_s$... ). A band is a structure being similar to a stripe but compared to a given stripe it is preferably even smaller, i.e., for a given length $l_b$ the width $w_b$ is preferably even reduced, while the restriction of the height $h_b$ may be relaxed for example $h_b \leq \frac{2}{3} w_b$ and $w_b \leq \frac{1}{3} l_b$ . Thus, it is possible to position two parallel bands of widths $w_{b,1}$ and $w_{b,2}$ and a given length $l_{b,1} = l_{b,2}$ on a stripe of the same length (i.e. $l_s = l_{b,1}$), while the distance between the two bands is at least $\frac{1}{3} Max(w_{b,1}, w_{b,2})$ .

The term "yarn" shall be understood to describe an item having length $l_t$ being much larger than its diameter $d_t$. For example, a yarn may be cable. The yarn may but does not need to have a circular cross section. The yarn can be conductive or isolating and may be monolithic or comprise components (e.g. filaments, threads, ...).

The heating apparatus according to the invention may be used as a floor heating and/or a wall heating and/or as ceiling heating. Other examples include the automotive applications (car heating, engine prewarming, ...), aerospace (in- and preflight deicing, cabin heating, ...), furniture (seat heating, cushion heating, bed heating, ...), chemical reaction vessel heating, conduit heating, storage vessel heating to name only a few.

**Description of Drawings**

In the following the invention will be described by way of example, without limitation of the general inventive concept, on examples of embodiment with reference to the drawings.

Figure 1 shows an example of a heating mat.
Figure 2 shows a detail of a cross section of the heating mat.
Figure 3 shows a detail of a cross section of the heating mat of another heating mat.
Figure 4 shows a detail of a cross section yet another heating mat.
Figure 5 shows a detail of a cross section yet another heating mat.
Figure 6 shows a heating apparatus.

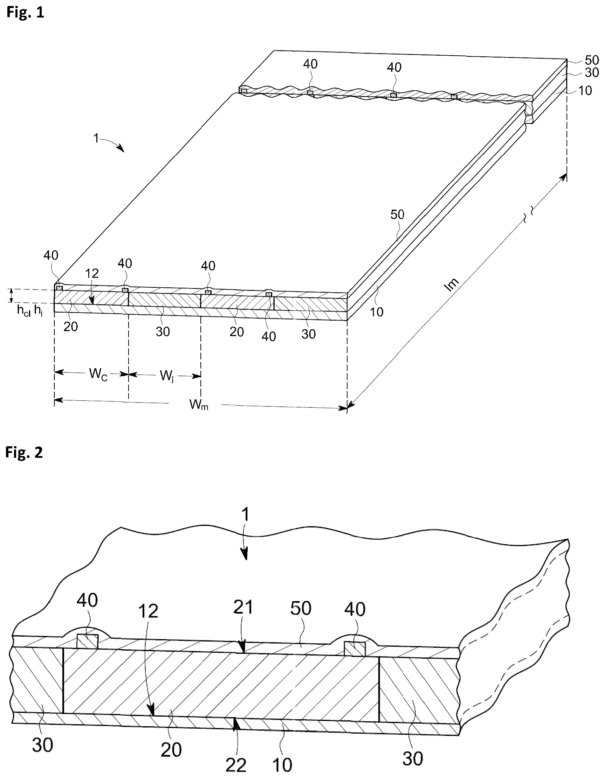

In Figures 1 and 2 a first example heating mat 1 is shown, wherein Figure 1 is perspective cross sectional view and Figure 2 is a detail of Fig. 1. The heating mat 1 has a support layer 10 with an isolating surface 12. On the isolating surface 12 are a number of conducting stripes 20. In between of the conducting stripes 20 are isolating stripes 30 on the support 10. The thickness $h_c$ of the conducting stripes 20 and the thickness $h_i$ of the isolating stripes 30 is preferably at least essentially the same, wherein at least essentially means in this context that the same thickness is preferred but that deviations (e.g., within $\pm 20\%$, $\pm 15\%$, $\pm 10\%$, $\pm 5\%$ or $\pm 1\%$ of the maximum height of the thicker layer) may be accepted. In the example of Fig. 1 and Fig. 2 (as in all examples) two contact electrodes 40 are attached and hence connected, preferably to each of the conducting stripes 20. These contact electrodes 40 are bands that may extend at least essentially over the full length of the respective conducting stripe 20, wherein at least essentially means in this context within $\pm 20\%$, $\pm 15\%$, $\pm 10\%$, $\pm 5\%$, $\pm 1\%$ or 0% of the length of the respective conducting stripe 20. In the present example, the electrodes 40, the conducting stripes 20 as well as the isolating stripes 30 have all the same length $l_m$, being as well the length of the support layer 10 and hence of the mat 1. Again, it is noted that these lengths are just examples and that the lengths may be varied. The widths of the conducting stripe 20 and of the isolating stripe are indicated by $w_c$ and $w_i$, respectively.

It is preferred if the contact electrodes 40 of each conducting stripe 20 have an at least essentially constant distance as a function of the longitudinal position of the distance measurement (least essentially means in this context within $\pm 20\%$, $\pm 15\%$, $\pm 10\%$, $\pm 5\%$, $\pm 1\%$ or 0% of the maximum distance between two contact electrodes being attached to the same conducting stripe). The heating mat 1 may have an optional top layer 50. The top layer 50 is preferably isolating and may preferably cover at least the surface of at least one, preferably of all the conductive stripes 20. As shown, the top layer 50 may as well cover the isolating stripes 30 and/or the contact electrodes 40. Preferably, the top layer 50 and/or the support layer 10 are/is fluid tight. This has shown to increase longevity of the heating mat 1.

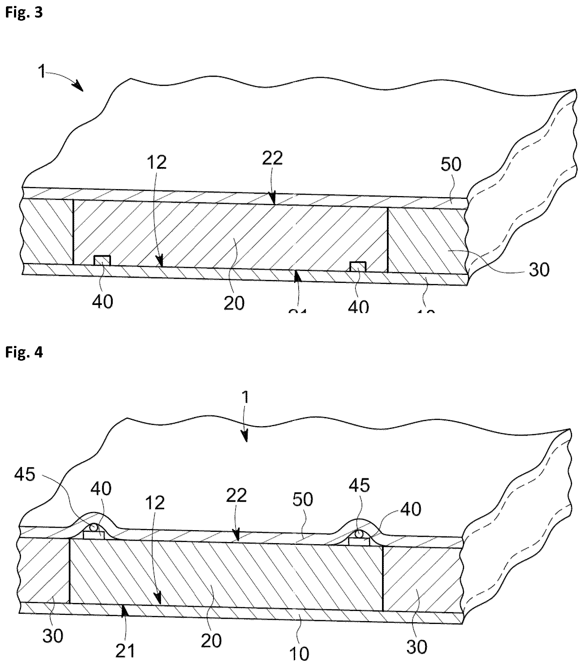

The example as shown in Fig. 3 is very similar to the example being shown in Figs. 1 and 2 and the description of Figs. 1 and 2 can be read on Fig. 3 as well. Fig. 3 is, like Fig. 2 a detail of a perspective cross sectional view. Different from the example as shown in Fig. 1 and 2, the contacting electrodes 40 are in Fig. 3 located on the support layer facing surface 21 (first surface 21) of the conducting stripes 40 (and hence as well in electrical contact with the respective stripe). At this point it is noted that the examples of Fig. 1, 2 and 3 can as well be combined.

For example, each conducting stripe 40 may have at least one first contacting electrode 40 attached to a first side 21 of the conducting stripe 20 and second contacting electrode 40 on the opposite second side 22 of the conducting stripe 20. This may provide advantages when connecting the electrodes. For examples all (or a set of) contact electrodes 40 on the first side 21 can be jointly connected to a first connector and the corresponding other electrodes 40 on the second sides 22 of the conducting stripes 20 may be jointly connected to a second connector.

The example being shown in Fig. 4 is very similar to the example being shown in Figs. 1 and 2 and the description of Figs. 1 and 2 can be read on Fig. 4 as well. Different from the example as shown in Fig. 1 and 2, the example shown in Fig. 4 further has optional strings of yarns 45 that are located on the surface of the contact electrodes 40 that face away from the respective conducting stripe 20. Hence, the yarn 45 may be e.g., in between of the optional top layer 50 and at least one of the contact electrodes 40. The yarn 45 may be conducting or an isolator and may preferably extend least essentially over the full length of the respective contact electrode 40 (at least essentially means in this context within $\pm 20\%$, $\pm 15\%$, $\pm 10\%$, $\pm 5\%$, $\pm 1\%$ or 0% of the length of the respective contact electrode). The yarn 45 increases the pressure by which the contact electrode 40 is pressed on the surface of the conducting stripe and thereby reduces potential contacting problems. In the present case yarns 45 with the same cross-sectional contours are depicted, but this is only for illustrative purposes (and shall not be considered as binding). Other cross-sectional shapes are as well possible, and these can be selected as required and available.

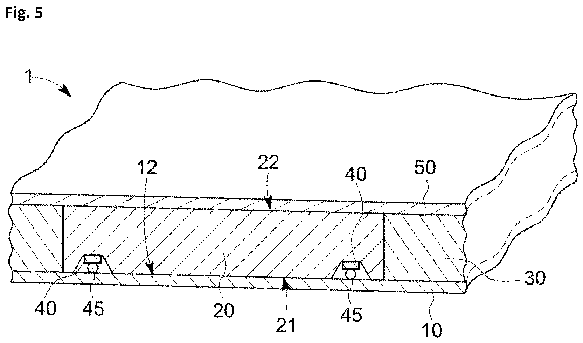

The example being shown in Fig. 5 is very similar to the example being shown in Fig. 3 and the description of Figs. 1, 2 and 3 can be read on Fig. 5 as well. Like in Fig. 4 a yarn 45 is located on the surface of the contacting electrodes 40 that faces away from the conducting stripe 20 being connected to the contacting electrode to thereby improve the contact between the conducting stripe 20 and the contact electrode 40. The only difference to Fig. 4 is the location of the contact electrode 20 and hence the description of Fig. 4 may read as well on Fig. 5. As already explained with reference to Fig. 3, the locations of the contact electrodes 40 and thus of the yarn 45 as shown in Fig. 4 and 5 may be combined.

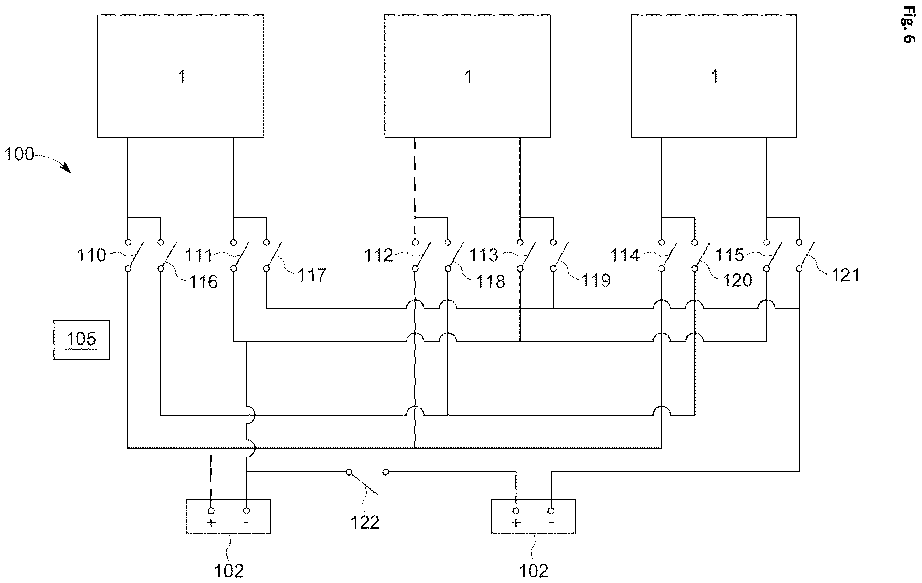

Fig. 6 shows a sketch of a heating apparatus 100. The heating apparatus has a controller 105 and a number $n$ of heating mats 1, which may, but do not need to be a heating mat as shown in one of the other figures and/or as claimed. The apparatus further comprises a number of $m$ power supplies 102. The number of power supplies is preferably greater or equal than two and/or smaller than the number of heating mats 1, hence in a preferred example $n > m \geq 2$. At least one, preferably each of the mats 1 is connected via a first connection to one of the power supplies. In Fig. 6, the left-hand mat 1 (the first mat 1) is for example connected by two first connections to the left-hand side power supply 102 (first power supply) and by a second first connection to the right hand side power supply 102 (second power supply). The first connection may be established by closing switches 110 and 111. The second connection may be established by closing switches 116 and 117. Similarly, the middle heating mat 1 (second heating mat 1) and the right-hand side mat 1 (third heating mat 1) are connected as well in parallel by fist connections to at least one, preferably as shown at least two power supplies. Further at least one of the heating mats 1 may be connected via a second connection to at least two power supplies 102 being connected in series.

In the present example, all heating mats 1 can be connected to two power supplies being connected in series, by closing (the optional) switch 122 (which may be always closed, as long as the corresponding heating mat is not connected in parallel to the at least two power supplies in series). Further, to establish the second connection switches of the first heating mat switches 110 and 117 have to be closed. The switches 110 to 122 are controlled by the controller 105, i.e., the controller is connected via a control interface with at least one of the switches 110 to 122. In the figure these control interfaces have been omitted to declutter the figure, but generally one could add an optional control line between the controller 105 and each of the switches 110 to 122. Preferably, the controller 105 is configured to open a first connection of one of the heating mats 1 and to close a second connection of the respective heating mat 1 for a time span $t$, i.e., for a (preferably short) duration $t$. Preferably, after such burst of length t the second connection may be opened again by the controller (hence the controller is configured accordingly). If the second connection is open, the controller may resume normal operation by opening and closing the corresponding first connection as required to heat the corresponding room. Preferably, there is a minimum time interval $t_i$ between these burst or groups of $k$ burst. The minimum time interval $t_i$ is preferably greater or equal than $t_{min}$ (i.e. $t_i \leq t_{min}$) and $t_{min}/s \in T_i$ with $T_i = \{1,20,30,60,300,600,10^3\}$ (and $s$ is the SI-unit second). Although in Fig. 6 each of the $n$ heating mat 1 has a first connection with each of $m$ power supplies and as well a second connection with the power supplies being connected in series, this is not required. It is sufficient, if each heating mat 1 is connected via a first connection with a first power supply, wherein multiple heating mats 1 may be connected in parallel by respective first connections to the same power supply. The nominal power of the power supply may be smaller than the sum of the nominal power consumptions of at least two (and/or of all) these heating mats 1. Thus, the controller 105 is preferably configured to connect only a single heating mat to a power supply at the same time by the first connection. The controller 105 is further preferably configured to sequentially connect at least two heating mats to the same power supply 102 by controlling the switches 110 to 122. This allows to reduce the number of expensive power supplies 102.

List of reference numerals

| 1 | heating mat |
|---|---|
| 10 | support layer |
| 12 | non-conducting surface / isolating surface |
| 20 | conducting stripe |
| 21 | first side (support layer facing side) |
| 22 | second side (side facing away from the support layer) |
| 30 | isolating stripe |
| 40 | contact electrode (optional) |
| 45 | yarn (optional) |
| 50 | top layer |
| 100 | apparatus |
| 102 | power supply |
| 105 | controller |
| 110 to 122 | switch, controlled by controller |

**Claims**

1. A heating apparatus (100), comprising at least a controller (105), a number of $n$ sets of at least one heating mat (1) and a number m of at least two power supplies (102), wherein at least one, preferably each, of the sets of heating mats (1) are each connected via two first connections comprising switches (110 to 120) to at least two of the power supplies, wherein the switches (110 to 120) are controlled by the controller (105),

   wherein the number m of power supplies (102) is smaller than the number of heating mats (1), wherein at least one of the heating mats (1) is a member of a set of heating mats (1) and wherein the controller is configured for individually control operation of each of the sets of heating mats (1), and
   wherein the controller (105) is configured to open and close a second connection, wherein the second connection is a series connection of at least two of the power supplies (102) to a single one of the $n$ sets of heating mats (1).

2. A heating apparatus (100), comprising at least two power supplies (102), at least two sets of at least one heating mat (1), at least two electrically controlled switches (110 to 122) and a controller (105) for controlling the switches (110 to 122), wherein the at least two heating mats (1) are each connected via two first connections comprising at least one electrically controlled switch (110 to 122) with at least two of the power supplies, wherein at least one of the at least two heating mats (1) comprises at least a support layer (10) with an upper isolating surface (12) and a heating layer on top of the isolating surface (12),

   wherein at least one of the heating mats (1) is a member of a set of heating mats (1) and wherein the controller is configured for individually control operation of each of the sets of heating mats (1),
   wherein the controller is configured to close only a number of electrically controlled switches being smaller than the number of heating mats at the same time, and
   wherein the controller (105) is configured to open and close a second connection, wherein the second connection is a series connection of at least two of the power supplies (102) to a single one of the at least two sets of heating mats (1).

3. The heating apparatus (100) of one of the previous claims, **characterized in that** at least one of the heating mats (1) is a heating mat (1) for a floor heating and/or wall heating and **in that** the at least one heating mat (1) comprises at least a support layer (10) with an upper isolating surface (12) and a heating layer on top of the isolating surface (12), **characterized in that**

   - the heating layer comprises at least two electrically conductive stripes (20), each having a longitudinal extension and a width,
   - the two electrically conductive stripes (20) are horizontally spaced from each other, and **in that**
   - an isolating stripe (30) extends in between of the two conductive stripes (20).

4. The heating apparatus (100) of the previous claim, **characterized in that** an isolating top layer (50) is laminated on the heating layer.

5. The heating apparatus (100) of one of claims 3 or 4, **characterized in that** the at least two conductive stripes (20) comprise a fabric comprising at least conductive fibers.

6. The heating apparatus (100) of the previous claim, **characterized in that** the conductive fibers comprise steel fibers, in particular stainless-steel fibers.

7. The heating apparatus (100) of the previous claim, **characterized in that** the fabric further comprises non-conducting fibers.

8. The heating apparatus (100) of one of claims 3 to 7, **characterized in that** the two conducting stripes (20) each have a first contact electrode (40) and a second contact electrode (40).

9. The heating apparatus (100) of claim 4, **characterized in that** the first contact electrode (40) and the second contact electrode (40) are spaced by at least 1/3 of the width of the respective conductive stripe (20).

10. The heating apparatus (100) of one of claims 8 or 9, **characterized in that** at least one first contact electrode (40) is on a first side (21) of the conducting stripe (20) and that least one second contact electrode (40) is on a second side (22) of the conducting stripe.

11. The heating apparatus (100) of one of claims 3 to 10, **characterized in that** the two conducting stripes (20) are connected in parallel.

12. The heating apparatus (100) of the previous claim, **characterized in that** the controller (105) is configured to open the switches (110 - 122) to thereby disconnect a first set of heating mats (1) from any of the power supplies (102) and subsequently connect at least two power supplies (102) in series to the first set of heating mats (1) to the two power supplies (102) being connected in series for a duration $t_s$.

13. The heating apparatus (100) of the previous claim, **characterized in that** the duration $t_s$ is smaller or equal 10s, i.e., $t_s \leq 10s$.

**Patentansprüche**

1. Eine Heizvorrichtung (100), aufweisend mindestens eine Steuerung (105), eine Anzahl von n Sätzen von mindestens einer Heizmatte (1) und eine Anzahl m von mindestens zwei Stromversorgungen (102), wobei mindestens ein, vorzugweise jeder, der Sätze von Heizmatten (1) jeweils über zwei erste, Schalter (110 bis 120) aufweisende Verbindungen mit mindestens zwei der Stromversorgungen verbunden sind, wobei die Schalter (110 bis 120) von der Steuerung (105) gesteuert werden,

    wobei die Anzahl m von Stromversorgungen (102) kleiner ist als die Anzahl von Heizmatten (1),
    wobei mindestens eine der Heizmatten (1) ein Element eines Satzes von Heizmatten (1) ist und wobei die Steuerung konfiguriert ist, um den Betrieb von jedem der Sätze von Heizmatten (1) individuell zu steuern, und
    wobei die Steuerung (105) konfiguriert ist, um eine zweite Verbindung zu öffnen und zu schließen, wobei die zweite Verbindung eine Reihenschaltung von mindestens zwei der Stromversorgungen (102) zu einem einzelnen von den n Sätzen von Heizmatten (1) ist.

2. Die Heizvorrichtung (100), aufweisend mindestens zwei Stromversorgungen (102), mindestens zwei Sätze von mindestens einer Heizmatte (1), mindestens zwei elektrisch gesteuerte Schalter (110 bis 122) und eine Steuerung (105) zum Steuern der Schalter (110 bis 122), wobei die mindestens zwei Heizmatten (1) jeweils über zwei erste, mindestens einen elektrischen Schalter (110 bis 122) aufweisende Verbindungen mit mindestens zwei der Stromversorgungen verbunden sind,

    wobei mindestens eine der mindestens zwei Heizmatten (1) mindestens eine Trägerschicht (10) mit einer oberen isolierenden Oberfläche (12) und einer Heizschicht auf der isolierenden Oberfläche (12) aufweist,
    wobei mindestens eine der Heizmatten (1) ein Element eines Satzes von Heizmatten (1) ist und wobei die Steuerung konfiguriert ist, um den Betrieb eines jeden der Sätze von Heizmatten (1) individuell zu steuern,
    wobei die Steuerung konfiguriert ist, um nur eine Anzahl von elektrisch gesteuerten Schaltern gleichzeitig zu steuern, die kleiner ist als die Anzahl von Heizmatten (1), und
    wobei die Steuerung (105) konfiguriert ist, um eine zweite Verbindung zu öffnen und zu schließen, wobei die zweite Verbindung eine Reihenschaltung von mindestens zwei der Stromversorgungen (102) zu einem einzelnen der mindestens zwei Sätze von Heizmatten (1) ist.

3. Die Heizvorrichtung (100) nach einem der vorhergehenden Ansprüche, **dadurch gekennzeichnet, dass** mindestens eine der Heizmatten (1) eine Heizmatte (1) für eine Fußbodenheizung und/oder eine Wandheizung ist und dass die mindestens eine Heizmatte (1) mindestens eine Trägerschicht (10) mit einer oberen isolierenden Oberfläche (12) und eine Heizschicht auf der isolierenden Schicht (12) aufweist, **dadurch gekennzeichnet, dass**

    - die Heizschicht mindestens zwei elektrisch leitfähige Streifen (20) aufweist, die jeweils eine Längsausdehnung und eine Breite aufweisen,
    - die beiden elektrisch leitfähigen Streifen (20) horizontal voneinander beabstandet sind, und dass
    - ein Isolierstreifen (30) sich zwischen den beiden leitfähigen Streifen (20) erstreckt.

4. Die Heizvorrichtung (100) nach dem vorhergehenden Anspruch, **dadurch gekennzeichnet, dass** eine isolierende Deckschicht (50) auf die Heizschicht laminiert ist.

5. Die Heizvorrichtung (100) nach einem der Ansprüche 3 oder 4, **dadurch gekennzeichnet, dass** die mindestens zwei leitfähigen Streifen (20) ein Gewebe aufweisend mindestens leitfähige Fasern aufweist.

6. Die Heizvorrichtung (100) nach dem vorhergehenden Anspruch, **dadurch gekennzeichnet, dass** die leitfähigen Fasern Stahlfasern, insbesondere Edelstahlfasern aufweisen.

7. Die Heizvorrichtung (100) nach dem vorhergehenden Anspruch, **dadurch gekennzeichnet, dass** das Gewebe weiterhin nicht-leitende Fasern aufweist.

8. Die Heizvorrichtung (100) nach einem der Ansprüche 3 bis 7, **dadurch gekennzeichnet, dass** die beiden leitenden Streifen (20) jeweils eine erste Kontaktelektrode (40) und eine zweite Kontaktelektrode (40) aufweisen.

9. Die Heizvorrichtung (100) nach Anspruch 4, **dadurch gekennzeichnet, dass** die erste Kontaktelektrode (40) und die zweite Kontaktelektrode (40) um mindestens 1/3 der Breite des jeweiligen leitfähigen Streifens (20) beabstandet sind.

10. Die Heizvorrichtung (100) nach einem der Ansprüche 8 oder 9, **dadurch gekennzeichnet, dass** sich mindestens eine erste Kontaktelektrode (40) auf einer ersten Seite (21) des leitenden Streifens (20) befindet und dass sich mindestens eine zweite Kontaktelektrode (40) auf einer zweiten Seite (22) des leitenden Streifens befindet.

11. Die Heizvorrichtung (100) nach einem der Ansprüche 3 bis 10, **dadurch gekennzeichnet, dass** die beiden leitenden Streifen (20) parallel geschaltet sind.

12. Die Heizvorrichtung (100) nach dem vorhergehenden Anspruch, **dadurch gekennzeichnet, dass** die Steuerung (105) konfiguriert ist, um die Schalter (110 - 122) zu öffnen, um dadurch einen ersten Satz von Heizmatten (1) von jeder der Stromversorgungen (102) zu trennen und anschließend mindestens zwei Stromversorgungen (102) in Reihe mit dem ersten Satz von Heizmatten (1) mit den beiden in Reihe geschalteten Stromversorgungen (102) für eine Dauer $t_s$ zu verbinden.

13. Die Heizvorrichtung (100) nach dem vorhergehenden Anspruch, **dadurch gekennzeichnet, dass** die Dauer $t_s$ kleiner oder gleich 10s ist, d. h. $t_s \leq 10s$.

**Revendications**

1. Appareil de chauffage (100), comprenant au moins un dispositif de commande (105), un nombre n d'ensembles d'au moins un tapis chauffant (1) et un nombre m d'au moins deux alimentations électriques (102), dans lequel au moins un, de préférence chacun, des ensembles de tapis chauffants (1) est connecté via deux premières connexions comprenant des commutateurs (110 à 120) à au moins deux des alimentations électriques, dans lequel les commutateurs (110 à 120) sont commandés par le dispositif de commande (105),

   dans lequel le nombre m d'alimentations électriques (102) est inférieur au nombre de tapis chauffants (1),
   dans lequel au moins un des tapis chauffants (1) fait partie d'un ensemble de tapis chauffants (1) et en ce que le dispositif de commande est configuré pour commander individuellement le fonctionnement de chacun des ensembles de tapis chauffants (1), et
   dans lequel le dispositif de commande (105) est configuré pour ouvrir et fermer une deuxième connexion, dans lequel la deuxième connexion est une connexion en série d'au moins deux des alimentations électriques (102) à un seul des n ensembles de tapis chauffants (1).

2. Appareil de chauffage (100), comprenant au moins deux alimentations électriques (102), au moins deux ensembles d'au moins un tapis chauffant (1), au moins deux commutateurs à commande électrique (110 à 122) et un dispositif de commande (105) pour commander les commutateurs (110 à 122), dans lequel les au moins deux tapis chauffants (1) sont chacun connectés via deux premières connexions comprenant au moins un commutateur à commande électrique (110 à 122) à au moins deux des alimentations électriques,

   dans lequel au moins un des au moins deux tapis chauffants (1) comprend au moins une couche de support (10) avec une surface isolante supérieure (12) et une couche chauffante au-dessus de la surface isolante (12),
   dans lequel au moins l'un des tapis chauffants (1) fait partie d'un ensemble de tapis chauffants (1) et en ce que le dispositif de commande est configuré pour commander individuellement le fonctionnement de chacun des ensembles de tapis chauffants (1),
   dans lequel le dispositif de commande est configuré pour fermer uniquement un nombre de commutateurs à commande électrique inférieur au nombre de tapis chauffants en même temps, et

dans lequel le dispositif de commande (105) est configuré pour ouvrir et fermer une deuxième connexion, dans lequel la deuxième connexion est une connexion en série d'au moins deux des alimentations électriques (102) à un seul des au moins deux ensembles de tapis chauffants (1).

3. Appareil de chauffage (100) selon l'une des revendications précédentes, **caractérisé en ce qu'**au moins l'un des tapis chauffants (1) est un tapis chauffant (1) pour un chauffage au sol et/ou un chauffage mural et **en ce que** l'au moins un tapis chauffant (1) comprend au moins une couche de support (10) avec une surface isolante supérieure (12) et une couche chauffante au-dessus de la surface isolante (12), **caractérisé en ce que**

    - la couche chauffante comprend au moins deux bandes électroconductrices (20), chacune ayant une extension longitudinale et une largeur,
    - les deux bandes électroconductrices (20) sont espacées horizontalement l'une de l'autre, et **en ce que**
    - une bande isolante (30) s'étend entre les deux bandes conductrices (20).

4. Appareil de chauffage (100) selon la revendication précédente, **caractérisé en ce qu'**une couche haute isolante (50) est stratifiée sur la couche chauffante.

5. Appareil de chauffage (100) selon l'une des revendications 3 ou 4, **caractérisé en ce que** les au moins deux bandes conductrices (20) comprennent un tissu comprenant au moins des fibres conductrices.

6. Appareil de chauffage (100) selon la revendication précédente, **caractérisé en ce que** les fibres conductrices comprennent des fibres d'acier, en particulier des fibres d'acier inoxydable.

7. Appareil de chauffage (100) selon la revendication précédente, **caractérisé en ce que** le tissu comprend en outre des fibres non conductrices.

8. Appareil de chauffage (100) selon l'une des revendications 3 à 7, **caractérisé en ce que** les deux bandes conductrices (20) ont chacune une première électrode de contact (40) et une deuxième électrode de contact (40).

9. Appareil de chauffage (100) selon la revendication 4, **caractérisé en ce que** la première électrode de contact (40) et la deuxième électrode de contact (40) sont espacées d'au moins 1/3 de la largeur de la bande conductrice (20) respective.

10. Appareil de chauffage (100) selon l'une des revendications 8 ou 9, **caractérisé en ce qu'**au moins une première électrode de contact (40) se trouve sur un premier côté (21) de la bande conductrice (20) et qu'au moins une deuxième électrode de contact (40) se trouve sur un deuxième côté (22) de la bande conductrice.

11. Appareil de chauffage (100) selon l'une des revendications 3 à 10, **caractérisé en ce que** les deux bandes conductrices (20) sont connectées en parallèle.

12. Appareil de chauffage (100) selon la revendication précédente, **caractérisé en ce que** le dispositif de commande (105) est configuré pour ouvrir les commutateurs (110 à 122) afin de déconnecter ainsi un premier ensemble de tapis chauffants (1) de l'une quelconque des alimentations électriques (102) et de connecter ensuite au moins deux alimentations électriques (102) en série au premier ensemble de tapis chauffants (1) aux deux alimentations électriques (102) qui sont connectées en série pendant une durée $t_s$.

13. Appareil de chauffage (100) selon la revendication précédente, **caractérisé en ce que** la durée $t_s$ est inférieure ou égale à 10 s, c'est-à-dire $t_s \leq 10$ s.

**Fig. 1**

**Fig. 2**

**Fig. 3**

**Fig. 4**

**Fig. 5**

**Fig. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10327342 B4
- US 20080210679 A1
- WO 2021259896 A1
- WO 2007137854 A
- EP 3016475 A
- EP 3691480 A
- WO 2007137854 A1
- GB 2493623 A